# EUROPEAN PATENT SPECIFICATION

(11) **EP 1 796 340 B1**
(45) Date of publication and mention of the grant of the patent: **30.06.2010**
(21) Application number: 05405691.6
(22) Date of filing: 09.12.2005
(51) Int. Cl.: H04L 29/06

(54) **Method of securing network configuration data in automation networks**
Verfahren zur Sicherung von Konfigurationsdaten in Automatisierungsnetzwerken
Procédé de sécurisation de données de configuration pour les réseaux d'automatisation

(43) Date of publication of application: 13.06.2007
(73) Proprietor: ABB Research Ltd., 8050 Zürich (CH)
(72) Inventor: Dacfey, Dzung, CH-5430 Wettingen (CH)
(74) Representative: Zimmermann, Gilbert

(56) References cited:
- US-A- 5 784 577
- US-B1- 6 539 480

## Description

### FIELD OF THE INVENTION

The present invention relates to the configuration of automation networks. Specifically, the invention relates to securing network configuration data stored in devices connected to an automation network.

### BACKGROUND OF THE INVENTION

Modem industrial automation networks rely on communication networks that support remote configuration and/or adaptive learning and make use of a number of automatic configuration features. Typically, these automatic configuration features are implemented by letting network equipment adaptively learn the configuration through observing the network traffic. For example, the TCP/IP/Ethernet protocol suite, used in industrial Ethernets, includes a number of housekeeping protocols and mechanisms designed to simplify network operation and configuration for the users. The networking modules and devices learn their best configuration (e.g. the routers/switches to use for a certain destination), (i), by observing user traffic and, (ii), exchanging configuration information between themselves. Known implementations include switches and ARP-caches (Address Resolution Protocol) learning the port/MAC (Medium Access Control) address mapping from the incoming traffic, the RSTP protocol (Rapid Spanning Tree Protocol) to exchange Ethernet-switching information, the DHCP (Dynamic Host Configuration Protocol) and ARP protocols to map MAC to IP (Internet Protocol) addresses, the RIP (Routing Information Protocol) and OSPF (Open Shortest Path First) routing protocols to exchange IP-routing information, the NetBIOS (Network Basic Input Output System) protocol to find nodes, and the DNS (Dynamic Network Services) protocol to map names to IP addresses. Also, the SNMP (Simple Network Management Protocol) protocol makes it possible to access directly the configuration tables in the networking equipment.

Current versions of these protocols are not protected against electronic attacks. An attacker may thus, (i), insert spoofed traffic messages (i.e. with falsified source address) to mislead the learning algorithms, (ii), impersonate server or other networking equipment and send erroneous responses to requests for routing or switching information, or, (iii), misconfigure the networking equipment directly by sending wrong configuration commands.

On the application level, specifically for industrial process or factory automation, it may also be possible that an attacker intentionally (or inadvertently) misconfigures the automation or process control parameters.

To overcome the vulnerabilities of the networking protocols mentioned above, conventionally, shortcomings are being addressed individually and separately for each protocol. Typically, security extensions are introduced which support cryptographic authentication (using challenge/response or digital signatures) and key exchange for subsequent encryption. This implies that each transmitted message will be protected and must be processed according to the specified cryptographic algorithm. On the application level, protection is provided by assigning users to specific roles defining rights to operate or to re-configure the system.

However, these solutions require a separate activation of the security measure for each protocol, application, and device. This may be cumbersome and unacceptable in practice.

The patent US 5,784,577 is concerned with the modification of configuration data of an individual Programmable Logic Device (PLD). Incremented version control number and modified PLD configuration data are downloaded to the PLD, after which a disabling signal is sent, preventing further modification to the configuration data.

### DESCRIPTION OF THE INVENTION

It is therefore an objective of the present invention to protect configuration mechanisms in automation networks against electronic attacks, without having to provide separate security measures for different protocols, applications, and devices. This objective is achieved by a method of securing network configuration data according to claim 1 and a device according to claim 7. Further preferred embodiments are evident from the dependent claims.

The present invention takes advantage of the fact that in industrial automation systems there are two well-separated phases or modes:

### 1) Installation and configuration

Specialized staff is present at the plant to set up and test the automation system and its configuration. Full flexibility in configuration and in automatic learning features of the automation network are desirable during this phase. Thus network configuration data stored in devices of the automation network is altered adaptively in this phase.

### 2) Normal operation

Operators monitor and control the automation process during normal operation. No changes in the configuration of the automation network are to be done in this phase.

For the purpose of the present invention, an automation network is any local area communications network supporting automatic and/or remote configuration of network configuration data in networking devices and/or automation and process control devices connected to the network. Moreover, in the context of this presentation, network configuration data includes routing information, e.g. routers/switches to use for a certain destination, addressing information, e.g. port/MAC address mapping, and any other data related to the topography of the network.

According to the present invention, the above-mentioned objects are particularly achieved in that, in response to a security message received over the automation network and indicative of configuration disablement, network configuration data stored in devices connected to the automation network is secured by the devices disabling, in the respective device, mechanisms for altering the configuration data. Transmitting to all the devices on the automation network, at the completion of the installation and configuration phase, a security message that indicates configuration disablement makes it possible to initiate in the devices a secure mode. In this secure mode, each device disables any configuration and learning mechanisms it supports, particularly any mechanisms for altering adaptively the configuration data based on network traffic received at the respective device. Thus, configuration data cannot be altered in the devices and neither attackers nor unintentional configuration errors can disturb the automation system in this secured mode. Before such a "freeze" command is received, devices accept and support full configuration flexibility and adaptive learning of their configuration, thus configuration data is altered, presumably in an insecure mode. For example, the security messages are transmitted by a dedicated or temporarily selected authorizing unit connected to the automation network.

In an embodiment, in response to a security message received over the automation network and indicative of configuration enablement, the devices enable, in the respective device, the mechanisms for altering the configuration data. For example, the devices enable for a limited time period only the mechanisms for altering the configuration data.

Preferably, the devices verify authentication data included in the security message, prior to disabling or enabling the mechanisms for altering the configuration data.

In an embodiment, the security message includes command data, and the devices enable or disable, in the respective device, selected ones of the mechanisms for altering the configuration data, based on the command data. For example, the command data is indicative of a security level. Based on the security level, the devices enable a mechanism for manual re-configuration in devices of type networking device, a mechanism for manual re-configuration in devices of type automation and process control device, a mechanism for automatic reassignment and re-mapping of addresses, a mechanism for updating message exchange between routers, a mechanism for automatic learning of switching tables in switches, and/or a mechanism for automatic switch-overs for redundancy handling.

In a further embodiment, the devices log messages and/or actions that are rejected because of disabled mechanisms for altering the configuration data. Furthermore, in an embodiment, the devices generate alarms in response to rejected messages and/or actions.

In addition to a method of securing network configuration data stored in devices connected to an automation network, and a device used for executing the method, the present invention also relates to a computer program product including computer program code means for controlling one or more processors of a device, connected to an automation network and configured to store network configuration data, particularly, a computer program product including a computer readable medium containing therein the computer program code means.

### BRIEF DESCRIPTION OF THE DRAWINGS

The present invention will be explained in more detail, by way of example, with reference to the drawings in which:
Fig. 1 shows an automation network with several devices,
Fig. 2 shows a security message and data elements included therein,
Fig. 3 shows a data structure of command data included in the security message, and
Fig. 4 shows an exemplary sequence of steps for securing network configuration data stored in the devices.

### DETAILED DESCRIPTION OF PREFERRED EMBODIMENTS

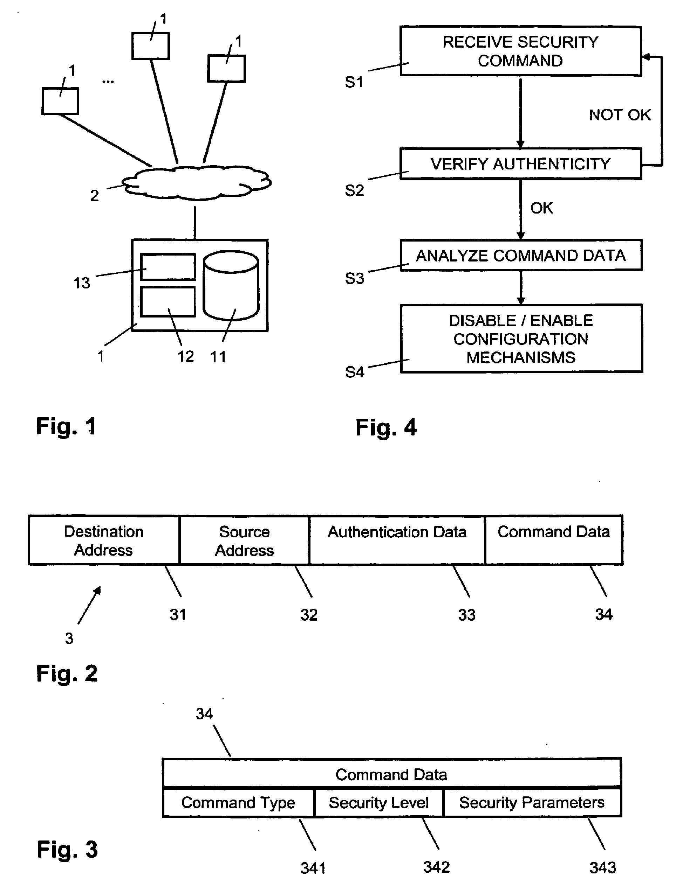

Fig. 1 shows a block diagram illustrating schematically an automation network 2 having connected thereto a plurality of devices 1, including networking devices, e.g. routers, switches or personal firewalls, and field devices, e.g. automation and process control devices. As is illustrated in Fig. 1, the devices 1 include a data store with network configuration data 11 and functional modules, namely a security module 13 and a configuration module 12 with configuration mechanisms for altering (updating) the configuration data 11. For example, the configuration module 12 includes mechanisms for manual re-configuration as well as mechanisms for altering adaptively the configuration data 11 based on network traffic received at the respective device 1 and configuration information exchanged between the devices 1, e.g. a mechanism for automatic reassignment and re-mapping of addresses, a mechanism for updating message exchange between routers, and/or a mechanism for automatic learning of switching tables in switches. Preferably, the functional modules and the configuration mechanisms are implemented as programmed software modules or procedures, respectively; however, one skilled in the art will understand that the functional modules and the configuration mechanisms can be implemented fully or partially in hardware. The computer program code of the software modules is stored in a computer program product, e.g. in a computer readable medium, either in memory integrated in the devices 1 or on a data carrier that can be inserted into the devices 1.

Fig. 2 shows an exemplary data structure of a security message 3. As illustrated in Fig. 2, the security message 3 includes a destination address 31, a source address 32, message authentication data 33, and command data 34. The security message 3 is sent to all configurable devices 1 on the automation network 2 using unicast, multicast, or broadcast addressing in the destination address 31. If multicast addressing is used, these devices 1 are configured to listen to the appropriate multicast destination address. The source address 32 identifies the device from which the security message 3 is sent. Furthermore, the source address 32 serves as a simple authenticator and an implied authorizer. The authentication data 33 is used to protect against electronic attackers sending unauthorized security messages and to provide authentication that is more secure than the mere indication of a source address 32. The authentication data 33 includes a message authentication code, a digital signature or certificate from the source of the message, or another cryptographic element as known in the art. Message authentication specifically for multicast transmission is described in the applicant's unpublished European Patent Application No. 05405012.5.

As illustrated in Fig. 3, the command data 34 includes a command type 341 indicating whether configuration of a device 1 is to be disabled or to be enabled, e.g. the command type 341 includes a "freeze" command code, indicating configuration disablement, or an "unfreeze" command code, indicating configuration enablement, respectively. Optionally, the command data 34 also includes a security level 342 defining one of a set of distinct levels of configuration disablement or enablement. For example, the security levels 342 include a complete configuration disablement ("absolute freeze"), a partial configuration disablement enabling manual (re-) configuration but disabling any automatic updating and learning, and/or a time-limited (re-) enablement for a defined period of time, e.g. 15 or 30 minutes, after which the devices revert autonomously back to the previous security level 342. Alternatively, the command type 341 may be used to define the security level. Optionally, the command data 34 includes security parameters 343 for defining various security related options. Alternatively, the command type 341 or the security levels 342 may be used to define security parameters 343. For example, the security parameters 343 are used to select non-mutual-exclusive security modes or levels, e.g. by defining a bitmap with bits indicating the security modes or levels. For example, the security related options include security modes or levels such as:
- allow manual (re-)configuration of networking devices (e.g. for replacement of devices 1);
- allow automatic reassignment and re-mapping of addresses (e.g. DHCP and DNS messages); for procedures involved see, for example, A. Swales, "Software solution for industrial IP addressing tasks," The online Industrial Ethernet book, Issue 18, January 2004, available at http://ethernet.industrial-networking.com/ieb/articledisplay.asp?id=178;
- allow updating message exchange between routers;
- allow automatic learning of switching tables in switches;
- allow automatic switch-overs for redundancy handling (e.g. specific RSTP messages);
- allow manual re-configuration of automation and process control devices;
- log messages/actions rejected due to disabled ("freeze" or secure) mode; and
- send alarms on rejecting of messages/actions.

The security message 3 is transmitted from an authorizing unit to all the devices 1 on the automation network 2. The authorizing unit is a device connected to the automation network 2 or a functional module included in one or more than one of the devices 1. Transmission of the security message 3 is triggered by a user command, a scheduled event, or a rules-based event, for example.

As indicated in Figure 4, in step S1, the security message 3 is received in all the devices 1 by their security module 13.

In step S2, the security module 13 of each device 1 verifies the authenticity of the received security message 3 based on the source address 32 and/or authentication data 33 included in the security message 3. If the security message 3 is determined to be authentic, i.e. transmitted by an authorized source, the security module 13 continues in step S3. Otherwise, the security message 3 is rejected and a new security message 3 is awaited.

In step S3, the security module 13 analyzes the command data 34 and determines command type 341, security level 342, and/or security parameters 343 of the security message 3.

In step S4, according to the results from step S3, the security module 13 enables or disables configuration mechanisms of the configuration module 12. Thus, on reception of a security message 3, each device 1 performs the actions according to its interpretation of the command data 34.

In an embodiment, the security module 13 logs any messages and/or actions that are rejected in the secure mode because of disabled configuration mechanisms. Furthermore, the security module 13 generates an alarm, in response to a rejected message and/or action.

It has been realized that the invention can be applied to the securing of industrial process control configurations as well, and is not limited to the communication aspect thereof. For instance, temperature limits, guide vane angles or valve settings that are adjustable parameters of a particular field device and likewise configured during an initial set-up phase may be protected against malicious or unintentional alterations in the same way as outlined above.

## Claims

1. A method of securing network configuration data (11) stored in devices (1) connected to an automation network (2), the method comprising:
- sending a security message (3) to all the devices (1) on the automation network (2), the security message (3) being indicative of configuration disablement or configuration enablement and including command data (34) indicative of a security level,
- disabling or enabling, in the respective device (1), selected mechanisms for altering the configuration data (11), based on the command data (34).

2. The method according to claim 1, wherein the devices (1) enable for a limited time period only the mechanisms for altering the configuration data (11).

3. The method according to claim 1, further comprising:
by the devices (1), verifying authentication data (33) included in the security message (3), prior to disabling or enabling the mechanisms for altering the configuration data (11).

4. The method according to claim 1, wherein, based on the security level, the devices (1) enable at least one of a mechanism for manual re-configuration in devices (1) of type networking device (1), a mechanism for manual re-configuration in devices (1) of type automation and process control device (1), a mechanism for automatic reassignment and re-mapping of addresses, a mechanism for updating message exchange between routers, a mechanism for automatic learning of switching tables in switches, and a mechanism for automatic switch-overs for redundancy handling.

5. The method according to claim 1, further comprising:
by the devices (1), logging of messages and/or actions rejected because of disabled mechanisms for altering the configuration data (11), and generating alarms in response to rejected messages and/or actions.

6. The method according to claim 1, comprising:
by an authorizing unit connected to the automation network (2), transmitting the security message (3) to the devices (1) connected to the automation network (2); and
by the devices (1), in response to the security message (3) received over the automation network (2), enabling or disabling, in the respective device (1), mechanisms for altering adaptively the configuration data (11) based on network traffic received at the respective device (1).

7. A device (1) configured to be connected to an automation network (2) and to store network configuration data (11), and including mechanisms for altering the configuration data (11); and means for receiving over the automation network (2) security messages (3) being indicative of configuration disablement or configuration enablement and including command data (34) indicative of a security level, and for disabling or enabling selected mechanisms for altering the configuration data (11), in response to the command data (34).

8. The device according to claim 7, **characterized in that** it is configured to enable for a limited time period only the mechanisms for altering the configuration data (11).

9. The device according to claim 7, **characterized in that** it is configured to verify authentication data (33) included in the security message (3), prior to disabling or enabling the mechanisms for altering the configuration data (11).

10. The device according to claim 7, **characterized in that** it is configured to disable or enable at least one of a mechanism for automatic reassignment and re-mapping of addresses, a mechanism for updating message exchange between routers, a mechanism for automatic learning of switching tables in switches, a mechanism for automatic switch-overs for redundancy handling, and a mechanism for altering adaptively the configuration data (11) based on network traffic received at the device (1).

## Patentansprüche

1. Verfahren zum Absichern von Netzwerkkonfigurationsdaten (11), die in mit einem Automatisierungsnetzwerk (2) verbundenen Einrichtungen (1) gespeichert sind, wobei das Verfahren die folgenden Schritte umfasst:
- Senden einer Sicherheitsnachricht (3) zu allen Einrichtungen (1) in dem Automatisierungsnetzwerk (2), wobei die Sicherheitsnachricht (3) Konfigurationssperrung oder Konfigurationsfreigabe angibt und Befehlsdaten (34) enthält, die ein Sicherheitsniveau angeben,
- Sperren oder Freigeben gewählter Mechanismen zum Ändern der Konfigurationsdaten (11) in der jeweiligen Einrichtung (1) auf der Basis der Befehlsdaten (34).

2. Verfahren nach Anspruch 1, wobei die Einrichtungen (1) die Mechanismen zum Ändern der Konfigurationsdaten (11) nur für einen begrenzten Zeitraum freigeben.

3. Verfahren nach Anspruch 1, ferner mit dem folgenden Schritt:
Verifizieren von in der Sicherheitsnachricht (3) enthaltenen Authentifikationsdaten (33) durch die Einrichtungen (1) vor dem Sperren oder Freigeben der Mechanismen zum Ändern der Konfigurationsdaten (11).

4. Verfahren nach Anspruch 1, wobei die Einrichtungen (1) auf der Basis des Sicherheitsniveaus mindestens eine der folgenden Alternativen freigeben:
einen Mechanismus zur manuellen Neukonfiguration in Einrichtungen (1) des Typs Vernetzungseinrichtung (1), einen Mechanismus zur manuellen Neukonfiguration in Einrichtungen (1) des Typs Automatisierungs- und Prozesssteuereinrichtung (1), einen Mechanismus für automatische Neuzuweisung und Neuabbildung von Adressen, einen Mechanismus zum Aktualisieren des Nachrichtenaustauschs zwischen Routern, einen Mechanismus zum automatischen Lernen von Switching-Tabellen in Switches und einen Mechanismus für automatische Umschaltungen für Redundanzabwicklung.

5. Verfahren nach Anspruch 1, ferner mit den folgenden Schritten:
Protokollieren von auf Grund von gesperrten Mechanismen zum Ändern der Konfigurationsdaten (11) zurückgewiesenen Nachrichten und/oder Aktionen durch die Einrichtungen (1) und Erzeugen von Alarmen als Reaktion auf zurückgewiesene Nachrichten und/oder Aktionen.

6. Verfahren nach Anspruch 1, ferner mit den folgenden Schritten:
Senden der Sicherheitsnachricht (3) zu den mit dem Automatisierungsnetzwerk (2) verbundenen Einrichtungen (1) durch eine mit dem Automatisierungsnetzwerk (2) verbundene Autorisierungseinheit; und
Freigeben oder Sperren von Mechanismen zum adaptiven Ändern der Konfigurationsdaten (11) durch die Einrichtungen (1) in der jeweiligen Einrichtung (1) als Reaktion auf die über das Automatisierungsnetzwerk (2) empfangene Sicherheitsnachricht (3) auf der Basis von in der jeweiligen Einrichtung (1) empfangenem Netzwerkverkehr.

7. Einrichtung (1), die dafür ausgelegt ist, mit einem Automatisierungsnetzwerk (2) verbunden zu werden und Netzwerkkonfigurationsdaten (11) zu speichern, und mit Mechanismen zum Ändern der Konfigurationsdaten (11); und Mitteln zum Empfangen von Sicherheitsnachrichten (3) über das Automatisierungsnetzwerk (2), die Konfigurationssperrung oder Konfigurationsfreigabe angeben und Befehlsdaten (34) enthalten, die ein Sicherheitsniveau angeben, und zum Sperren oder Freigeben gewählter Mechanismen zum Ändern der Konfigurationsdaten (11) als Reaktion auf die Befehlsdaten (34).

8. Einrichtung nach Anspruch 7, **dadurch gekennzeichnet, dass** sie dafür ausgelegt ist, die Mechanismen zum Ändern der Konfigurationsdaten (11) nur für einen begrenzten Zeitraum freizugeben.

9. Einrichtung nach Anspruch 7, **dadurch gekennzeichnet, dass** sie dafür ausgelegt ist, in der Sicherheitsnachricht (2) enthaltene Authentifikationsdaten (33) vor dem Sperren oder Freigeben der Mechanismen zum Ändern der Konfigurationsdaten (11) zu verifizieren.

10. Einrichtung nach Anspruch 7, **dadurch gekennzeichnet, dass** sie dafür ausgelegt ist, mindestens eine der folgenden Alternativen zu sperren oder freizugeben: einen Mechanismus zur automatischen Neuzuweisung und Neuabbildung von Adressen, einen Mechanismus zum Aktualisieren des Nachrichtenaustauschs zwischen Routern, einen Mechanismus zum automatischen Lernen von Switching-Tabellen in Switches, einen Mechanismus für automatische Umschaltungen für Redundanzabwicklung und einen Mechanismus zum adaptiven Ändern der Konfigurationsdaten (11) auf der Basis von in der Einrichtung (1) empfangenen Netzwerkverkehr.

## Revendications

1. Procédé de sécurisation de données de configuration (11) de réseau stockées dans des dispositifs (1) connectés à un réseau d'automatisation (2), le procédé comprenant les étapes suivantes :
- envoi d'un message de sécurité (3) à tous les dispositifs (1) par le réseau d'automatisation (2), le message de sécurité (3) indiquant une désactivation de configuration ou une activation de configuration et contenant des données de commande (34) indiquant un niveau de sécurité,
- désactivation ou activation, dans le dispositif (1) respectif, de mécanismes sélectionnés permettant la modification des données de configuration (11), en fonction des données de commande (34).

2. Procédé selon la revendication 1, les dispositifs (1) activant, uniquement pendant un intervalle de temps limité, les mécanismes permettant la modification des données de configuration (11).

3. Procédé selon la revendication 1, comprenant en outre l'étape suivants :
- vérification, par les dispositifs (1), de données d'authentification (33) contenues dans le message de sécurité (3) préalablement à la désactivation ou l'activation des mécanismes permettant la modification des données de configuration (11).

4. Procédé selon la revendication 1, les dispositifs (1) activant, en fonction du niveau de sécurité, au moins un des mécanismes suivants : un mécanisme permettant la reconfiguration manuelle dans les dispositifs (1) d'un dispositif (1) de type mise en réseau, un mécanisme permettant la reconfiguration manuelle dans les dispositifs (1) d'un dispositif (1) de type automatisation et commande de processus, un mécanisme permettant la réaffectation et le remappage automatiques d'adresses, un mécanisme permettant la mise à jour d'un échange de messages entre routeurs, un mécanisme permettant l'apprentissage automatique de tables de commutation dans des commutateurs, et un mécanisme permettant les transferts automatiques pour la gestion de la redondance.

5. Procédé selon la revendication 1, comprenant en outre l'étape suivante :
- enregistrement, par les dispositifs (1), de messages et/ou d'actions rejetés du fait de la désactivation de mécanismes permettant la modification des données de configuration (11), et production d'alarmes suite à des messages et/ou des actions rejetés.

6. Procédé selon la revendication 1, comprenant les étapes suivantes :
- transmission, par un module d'autorisation connecté au réseau d'automatisation (2), du message de sécurité (3) aux dispositifs (1) connectés au réseau d'automatisation (2) ; et
- suite à la réception du message de sécurité (3) par le réseau d'automatisation (2), activation ou désactivation, par les dispositifs (1), dans le dispositif (1) respectif, de mécanismes permettant la modification adaptative des données de configuration (11) en fonction du trafic sur le réseau reçu au niveau du dispositif (1) respectif.

7. Dispositif (1) conçu pour être connecté à un réseau d'automatisation (2) et pour stocker des données de configuration (11) de réseau, et contenant des mécanismes permettant la modification des données de configuration (11), et des moyens permettant la réception par le réseau d'automatisation (2) de messages de sécurité (3) indiquant une désactivation de configuration ou une activation de configuration et contenant des données de commande (34) indiquant un niveau de sécurité, et permettant la désactivation ou l'activation de mécanismes sélectionnés permettant la modification des données de configuration (11), en fonction des données de commande (34).

8. Dispositif selon la revendication 7, **caractérisé en ce qu'**il est configuré pour activer, uniquement pendant un intervalle de temps limité, les mécanismes permettant la modification des données de configuration (11).

9. Dispositif selon la revendication 7, **caractérisé en ce qu'**il est configuré pour vérifier des données d'authentification (33) contenues dans le message de sécurité (3) préalablement à la désactivation ou l'activation des mécanismes permettant la modification des données de configuration (11).

10. Dispositif selon la revendication 7, **caractérisé en ce qu'**il est configuré pour désactiver ou activer au moins un des mécanismes suivants : un mécanisme permettant la réaffectation et le remappage automatiques d'adresses, un mécanisme permettant la mise à jour d'un échange de messages entre routeurs, un mécanisme permettant l'apprentissage automatique de tables de commutation dans des commutateurs, un mécanisme permettant les transferts automatiques pour la gestion de la redondance, et un mécanisme permettant la modification adaptative des données de configuration (11) en fonction du trafic sur le réseau reçu au niveau du dispositif (1).
